# EUROPÄISCHE PATENTANMELDUNG

(11) **EP 4 303 968 A2**
(43) Veröffentlichungstag der Anmeldung: **10.01.2024**
(21) Anmeldenummer: 23211343.1
(22) Anmeldetag: 05.11.2020
(51) Int. Cl.: H01M 8/0245

(54) **GASDIFFUSIONSLAGE FÜR BRENNSTOFFZELLEN**

(30) Priorität: 20.11.2019 DE 102019131343
(62) Teilanmeldung aus: 20803494.2
(71) Anmelder: Carl Freudenberg KG, 69469 Weinheim (DE)
(72) Erfinder: BOCK, Achim, 69469 Weinheim (DE); KLEIN, Kristof, 69469 Weinheim (DE); RAKOUSKY, Christoph, 64372 Ober-Ramstadt (DE); BARSCH, Hannes, 69123 Heidelberg (DE)

(57) **Zusammenfassung**

Die vorliegende Erfindung betrifft eine Gasdiffusionslage für eine Brennstoffzelle, umfassend
a) ein flächiges elektrisch leitfähiges Fasermaterial und
b) eine mikroporöse Lage auf einer der Flächen des Fasermaterials,
wobei die Gasdiffusionslage in Bezug auf ihre Grundfläche (in der x,y-Ebene) wenigstens einen Eigenschaftsgradienten bezüglich wenigstens einer chemischen und/oder physikalischen Eigenschaft aufweist, ein Verfahren zur Herstellung einer solchen Gasdiffusionslage, eine Brennstoffzelle, die diese Diffusionslage enthält sowie die Verwendung der Diffusionslage.

## Beschreibung

### HINTERGRUND DER ERFINDUNG

Die vorliegende Erfindung betrifft eine Gasdiffusionslage für Brennstoffzellen, Brennstoffzellen, die diese enthalten und die Verwendung einer solchen Gasdiffusionslage.

Brennstoffzellen nutzen die chemische Umsetzung eines Brennstoffs, insbesondere von Wasserstoff, mit Sauerstoff zu Wasser, um elektrische Energie zu erzeugen. In Wasserstoff-Sauerstoff-Brennstoffzellen wird Wasserstoff oder ein wasserstoffhaltiges Gasgemisch der Anode zugeführt, wo eine elektrochemische Oxidation unter Abgabe von Elektronen stattfindet (H₂ → 2 H⁺ + 2 e⁻). Über eine Membran, welche die Reaktionsräume gasdicht voneinander trennt und elektrisch isoliert, erfolgt ein Transport der Protonen aus dem Anodenraum in den Kathodenraum. Die an der Anode bereitgestellten Elektronen werden über einen äußeren Leiterkreis der Kathode zugeleitet. Der Kathode wird Sauerstoff oder ein sauerstoffhaltiges Gasgemisch zugeführt, wobei eine Reduktion des Sauerstoffs unter Aufnahme der Elektronen stattfindet. Die dabei gebildeten Sauerstoffanionen reagieren mit den über die Membran transportierten Protonen unter Bildung von Wasser (1/2 O₂ + 2 H⁺ + 2 e⁻ -> H₂O).

Für viele Anwendungen, speziell im automobilen Antriebsstrang, werden Niedertemperatur-Protonenaustauschmembran-Brennstoffzellen (PEMFC, proton exchange membrane fuel cells, auch als polymer electrolyte membrane fuel cells bezeichnet) eingesetzt, die Wirkungsgrade von bis zu 60 % erzielen. Das Kernstück der PEMFC ist eine Polymer-Elektrolyt-Membran (PEM), die nur für Protonen (bzw. Oxoniumionen H₃O⁺) und Wasser durchlässig ist und das Oxidationsmittel, im Allgemeinen Luftsauerstoff, räumlich vom Reduktionsmittel trennt. Um einen möglichst guten Protonentransport über die Membran zu gewährleisten, werden in der Regel befeuchtete Membranen eingesetzt. Auf die gasdichte, elektrisch isolierende, protonenleitende Membran ist auf der Anoden- und Kathodenseite eine Katalysatorschicht aufgebracht, die die Elektroden ausbildet und die in der Regel Platin als katalytisch aktives Metall enthält. In den Katalysatorschichten laufen die eigentlichen Redoxreaktionen und Ladungstrennungen ab. An sie werden besondere Anforderungen gestellt, da sie gleichzeitig elektronen- und protonenleitfähig sein müssen und zusätzlich die Zuführung der Reaktionsgase und Abführung des bei der Kathodenreaktion gebildeten Wassers ermöglichen müssen. Membran und Katalysatorschichten bilden eine Einheit, die auch als CCM (catalyst coated membrane) bezeichnet wird. Auf beiden Seiten der CCM befindet sich eine Gasdiffusionslage (GDL), die den Zellaufbau stabilisiert und Transport- und Verteilerfunktionen für Reaktionsgase, Wasser, Wärme und Strom übernimmt. Membran, Elektroden und Gasdiffusionslage bilden die Membran-Elektroden-Einheit (MEA, membrane electrode assembly).

Eine Alternative zur CCM ist die Gasdiffusionselektrode (GDE), wobei das Elektrodenmaterial nicht auf die Membran, sondern auf die GDL aufgetragen wird. Die EP 2228857 A1 beschreibt eine Membran-Elektrodeneinheit für Hochtemperatur-Brennstoffzellen, die eine Gasdiffusionselektrode umfasst, die mindestens zwei Gasdiffusionsschichten aufweist, die Polytetrafluorethylen enthalten, wobei die Gasdiffusionsschichten unterschiedliche Polytetrafluorethylen-Konzentrationen aufweisen. Die GDE weist somit einen PTFE-Konzentrationsgradienten in Durchtrittrichtung der Betriebsmedien, d. h. bezüglich ihrer Dicke bzw. senkrecht zur Grundfläche (d. h. in Richtung der z-Achse), auf.

In Einzelzellen, die nur eine einzelne Membran-Elektroden-Einheit aufweisen, ist auf jeder Seite der MEA eine Strömungsverteilerplatte angeordnet, die Kanäle zur Zuführung der Prozessgase zu den Elektroden und in der Regel zusätzlich innenliegende Kühlkanäle zur Abführung der Wärme aufweist. Brennstoffzellen bestehen jedoch in der Regel nicht aus Einzelzellen, sondern aus einer Vielzahl von in einem Stapel (stack) angeordneter Membran-Elektroden-Einheiten, die in Reihe geschaltet sind und deren elektrische Leistungen sich addieren. Zwischen zwei Membran-Elektroden-Einheiten ist dann in der Regel nur eine Strömungsverteilerplatte (eine sogenannte Bipolarplatte) angeordnet. Diese Bipolarplatte ist auf der Vorderseite und auf der Rückseite strukturiert und weist jeweils Kanäle zur Versorgung der auf der einen Seite angrenzenden Kathode und der auf der anderen Seite angrenzenden Anode mit Prozessgasen sowie in der Regel zusätzlich innenliegende Kühlkanäle auf. Die Strömungsverteilerplatten, bzw. Bipolarplatten, bestehen aus einem elektrisch leitfähigen Material, um die elektrische Verbindung zwischen den gestapelten Membran-Elektroden-Einheiten herzustellen.

Die Hauptaufgabe der Strömungsverteilerplatten ist die gleichmäßige Versorgung der MEA mit Reaktionsgasen und der Abtransport der Reaktionsprodukte, d. h. bei der Wasserstoff-Sauerstoff-Brennstoffzelle des bei der Kathodenreaktion gebildeten Wassers. Dazu weisen die Strömungsverteilerplatten zwischen Zuführung und Abführung eine einseitig offene Kanalstruktur auf, das sogenannte Flowfield. Das Flowfield dient der makroskopischen Verteilung der Reaktionsgase an die angrenzende GDL, welche die mikroskopische Verteilung auf die katalytisch aktiven Bereiche der Membran übernimmt. Das Flowfield dient weiterhin dem Abtransport des gasförmigen und des flüssigen Produktwassers. Das Flowfield wird gebildet von Stegen und Kanälen, deren Anordnung ein charakteristisches Design bilden. Übliche Stegbreiten und Kanalbreiten liegen jeweils in einem Bereich von etwa 0,2 bis 1,5 mm. Bei der PEMFC werden aktuell hauptsächlich vier Flowfield Designs verwendet: Parallel-Flowfield mit geraden Kanälen, Mäander Flowfield, Interdigitated Flowfield mit unterbrochenen Kanälen und das Pföstchen-Flowfield. Bei der Auslegung des Flowfields ist neben der Prozessgasversorgung ein stetiger Kondensataustrag ein wichtiges Kriterium. Innerhalb des Flowfields dominiert der konvektive Stofftransport aufgrund des Druckunterschieds zwischen dem Zu- und Abfluss des Flowfields. Anode und Kathode unterscheiden sich in ihren Anforderungen bezüglich Zuführung von Prozessgasen und Abführung von Reaktionsprodukten. So wird auf Seiten der Anode der zugeführte Wasserstoff im Wesentlichen in Protonen umgewandelt, die durch die Membran zur Kathode wandern. Bei der Anodenreaktion wird kein Prozesswasser gebildet, es kann jedoch Wasser von der Kathode durch die Membran zur Anode gelangen. Auf der Seite der Kathode werden durch die Reduktionsreaktion signifikante Wassermengen gebildet, die über die Kanalstruktur der Strömungsverteilerplatten ausgetragen werden müssen. Die Strömungsverteilerplatten für die Kathode und die Anode, bzw. die beiden Seiten einer Bipolarplatte, weisen somit in der Regel unterschiedliche Flowfields auf.

Zwischen den Strömungsverteilerplatten, bzw. den Bipolarplatten, und den Katalysatorschichten befinden sich jeweils Gasdiffusionslagen, denen eine wesentliche Bedeutung für die Funktion und Leistungsfähigkeit der Brennstoffzelle zukommt:
- Alle in den Elektrodenreaktionen verbrauchten und entstehenden Prozesskomponenten müssen durch die Gasdiffusionslage transportiert und von der makroskopischen Struktur der Strömungsverteilerplatten/Bipolarplatten auf die mikroskopische Struktur der Katalysatorschichten homogen verteilt werden. Dazu zählt der Transport von Wasserstoff zur Anode und von Sauerstoff zur Kathode sowie von gasförmigem und flüssigem Wasser von der Anode in die Strömungskanäle der Strömungsverteilerplatten/Bipolarplatten. Dabei darf einerseits der Gastransport nicht durch übermäßige Flutung der Poren behindert werden, andererseits die MEA nicht austrocknen.
- Die in den Halbzellenreaktionen gebildeten und verbrauchten Elektronen müssen mit möglichst geringem Spannungsverlust zu den Strömungsverteilerplatten geleitet werden. Dies wird erreicht durch die Verwendung hoch leitfähiger Materialien.
- Die bei der Reaktion gebildete Wärme muss zum Kühlmittel in den Strömungsverteilerplatten abgeführt werden, so dass die Materialien der GDL auch über ausreichende Wärmeleitfähigkeit verfügen müssen.
- Zudem muss die GDL auch als mechanischer Ausgleich zwischen der makrostrukturierten Strömungsverteilerplatte und den Katalysatorschichten wirken. Dazu müssen Bauteiltoleranzen ausgeglichen und der Kompressionsdruck verteilt werden. Sie dient auch als mechanischer Schutz der sehr dünnen Membranen, die in den Brennstoffzellen hohen Lasten ausgesetzt sind.

Aufgrund der geforderten Eigenschaften bestehen GDL typischerweise aus einem Kohlefaser-Substrat, welches üblicherweise mit Fluor-Polymeren (z. B. PTFE) hydrophob ausgerüstet ist. Zur Optimierung der Transporteigenschaften von Gas und flüssigem Wasser sind die GDL im Allgemeinen mit einer mikroporösen Lage (MPL) flächig beschichtet. Die MPL besteht in der Regel aus einem fluorhaltigen Polymer als Binder (z. B. PTFE) sowie einem porösen und elektrisch leitfähigen Kohlenstoffmaterial (z. B. Ruß oder Graphit-Pulver). Während die Poren im Fasersubstrat der GDL üblicherweise Durchmesser von 10 bis 30 µm aufweisen, liegen die Porendurchmesser in der MPL üblicherweise in einem Bereich von 0,05 bis 1 µm. Da die Porengröße der Elektrode im Bereich von 10 bis 100 nm liegt, wird somit durch die MPL ein Übergang von den Makroporen des Substrats zu den Mikroporen der Elektrode geschaffen. Als Kohlefaser-Substrate für die GDL werden aktuell die drei folgenden Materialien eingesetzt:
- Kohlefaser-Gewebe: Zur Herstellung werden z. B. Garne aus oxidierten, aber noch nicht karbonisierten Polyacrylnitril-Fasern eingesetzt, die nach dem Weben karbonisiert bzw. graphitisiert werden.
- Kohlefaser-Papiere: Zur Herstellung werden z. B. PAN-Fasern karbonisiert, zu Faserbruchstücken zerkleinert, gelöst und analog zur Papierherstellung durch Sieben (Bütten) ein Fasergelege hergestellt. Zur Stabilisierung des Papiers werden Bindemittel, z. B. Phenolharze, eingesetzt.
- Kohlefaser-Vliesstoffe: Zur Herstellung können trocken gelegte, kardierte und Wasserstrahl-verfestigte Vliesstoffe aus oxidiertem Polyacrylnitril eingesetzt werden, die anschließend dickenkalibriert und karbonisiert werden. Ein leitfähiger Vliesstoff und seine Herstellung sind z. B. in der WO 02/31841 A2 beschrieben.

Die aus dem Stand der Technik bekannten GDL bestehen aus möglichst homogenen Schichten und Teilstrukturen. Sowohl die Faserstrukturen als auch die hydrophobe Ausrüstung und die MPL-Beschichtung weisen bislang keine gezielt erzeugten Eigenschaftsgradienten auf.

Es ist weiterhin ein Problem beim Betrieb von Brennstoffzellen, dass zwischen der Zuführung der Prozessgase zum Flowfield der Strömungsverteilerplatte und der Abführung der Reaktionsprodukte aus dem Flowfield große Unterschiede bezüglich der chemischen Zusammensetzung der strömenden Betriebsmedien (Sauerstoffgehalt, Wasserstoffgehalt, Gehalt an Wasser insgesamt) und der Betriebsparameter (Temperatur, Druck, Gehalt an gasförmigem und flüssigem Wasser) auftreten. Viele dieser Parameter weisen einen Gradienten sowohl bezogen auf den konkreten, durch das Flowfield-Design vorgegebenen Strömungsverlauf, als auch bezogen auf die direkte Verbindung zwischen Zuführung und Abführung der Betriebsstoffe auf. Diese Gradienten setzen sich in der GDL bis zu den Elektroden fort. Sie haben einen großen Einfluss auf die Leistung der Brennstoffzelle, da sie zu einem Gradienten der Stromdichteverteilung zwischen dem Eingang und Ausgang der jeweiligen Elektrode führen. Leistungsbestimmend sind dabei vor allem die Gradienten auf der Kathodenseite (Luftseite) einer Brennstoffzelle, wobei auch auf der Anodenseite Gradienten bei der Wasserstoffverteilung sowie ein Durchtritt von Wasser durch die Membran und eine damit verbundene Gradientenbildung auftreten kann. Im Folgenden wird diese Gradientenbildung für die Situation an der Kathode erläutert:
Kathoden-Eingang:
   O₂-Konzentration = maximal
   O₂-Druck = maximal
   Temperatur = minimal
   Feuchtegehalt Gas = minimal
   Menge Flüssigwasser kumuliert = minimal
Kathoden-Ausgang:
   O₂-Konzentration = minimal
   O₂-Druck = minimal
   Temperatur = maximal
   Feuchtegehalt Gas = maximal
   Menge Flüssigwasser kumuliert = maximal

Es wurden bereits Versuche unternommen, die Bildung derartiger Gradienten beim Betrieb der Brennstoffzelle zu reduzieren. Ein Ansatz liegt in der Ausgestaltung der Strömungsverteilerplatten/Bipolarplatten. So wurde versucht, über das Design des Flowfields (z. B. Cross- vs. Counterflow der Anoden- und Kathodengase) die Gradientenbildung zu minimieren.

Die WO 2015150533 beschreibt eine Bipolarplatte für Brennstoffzellen, deren hydraulischer Querschnitt dahingehend optimiert ist, dass der Druckverlust der Betriebsmedien reduziert wird und eine möglichst homogene Druckverteilung der Betriebsmedien über die Fläche realisiert wird. Dazu wird eine Bipolarplatte eingesetzt, die in drei Bereiche unterteilt ist, umfassend zwei Verteilerbereiche und einen aktiven Bereich. Ein erster Verteilerbereich dient dabei der Zuleitung von Betriebsmedien zu dem aktiven Bereich der Bipolarplatte, ein zweiter Verteilerbereich der Ableitung der Betriebsmedien aus dem aktiven Bereich. Zudem weist die Bipolarplatte Kanäle auf, welche die Betriebsmittelhauptports beider Verteilerbereiche miteinander verbinden. Ferner weisen die Verteilerbereiche zumindest einen Überschneidungsabschnitt auf, in dem die Kanäle einander nicht fluidverbindend überschneiden. Der Kathodengashauptport ist derart angeordnet, dass von diesem ausgehend Kathodenkanäle geradlinig über zumindest den Verteilerbereich der Brennstoffzelle verlaufen, und dass in einem ersten Überschneidungsabschnitt vom Anodengashauptport ausgehende Anodenkanäle und die Kathodenkanäle einander überschneiden und einen Winkel einschließen, der größer als 0° und kleiner als 90° ist. Auch die in der WO 2015150533 beschriebenen Brennstoffzellen sind bezüglich ihrer Eigenschaften noch verbesserungswürdig.

Die DE 10 2005 022 484 A1 beschreibt eine Gasdiffusionsschicht, die mindestens zwei miteinander wirkverbundene funktionelle Bereiche aufweist, wobei der erste Bereich eine poröse Struktur aufweist und der zweite Bereich als Stabilisierungszone ausgestaltet ist. Es ist ganz allgemein und ohne Stützung durch ein Ausführungsbeispiel beschrieben, dass die GDL einen progressiven Aufbau, z.B. in Form eines Gradienten, aufweisen kann. Beispielsweise kann die GDL aus einem einheitlichen Material bestehen, welches in Bezug auf seine Biegesteifigkeit, sein Zugmodul oder andere nicht näher angegebene mechanische Eigenschaften durch Gradienten in unterschiedlichen Raumrichtungen charakterisiert ist. In diesem Dokument ist insbesondere nicht beschrieben, dass die GDL mit einer MPL beschichtet ist, welche einen kontinuierlichen oder sprunghaften Eigenschaftsgradienten in der x-y-Ebene aufweist und dieser Gradient sich in Abhängigkeit vom Ort monoton ändert (d.h. entweder immer wächst oder immer fällt, wobei er in Teilbereichen auch konstant bleiben kann aber keine lokalen Minima oder Maxima aufweist).

Die US 2010/0255407 A1 beschreibt eine Elektrode für eine Brennstoffzelle, die eine Gasdiffusionslage, eine Katalysatorschicht und ein wasserabweisendes Material an der Grenzfläche zwischen Gasdiffusionslage und Katalysatorschicht umfasst. Konkret handelt es sich um eine spezielle Ausführung einer PEM-Brennstoffzelle mit einer Phosphorsäure-getränkten Elektrolytmembran. Das wasserabweisende Material soll verhindern, dass die Phosphorsäure einen gleichmäßigen Sauerstoffstrom in die Katalysatorschicht blockiert. Es weist einen kontinuierlichen Konzentrationsgradienten in einer ersten Richtung auf, der sich von der Gasdiffusionslage weg erstreckt (d.h. in z-Richtung) und einen diskontinuierlichen Konzentrationsgradienten in einer zweiten Richtung, senkrecht zur ersten Richtung (d.h. in der x,y-Ebene). Das wasserabweisende Material zwischen GDL und Katalysatorschicht ist ein wesentliches Merkmal der beschriebenen Elektrode, wobei dieses nicht der MPL entspricht, die noch zusätzlich vorhanden sein kann. Es ist zudem von kritischer Bedeutung, dass das wasserabweisende Material einen diskontinuierlichen Gradienten in Richtung der Oberfläche an der Grenzfläche zwischen GDL und Katalysatorschicht aufweist. Dazu kann das wasserabweisende Material beispielsweise punktförmig auf der GDL angeordnet sein, wobei die Punkte einen radialen Konzentrationsgradienten in Richtung der Oberfläche aufweisen. Auch in diesem Dokument ist nicht beschrieben, eine GDL mit einer MPL zu beschichten, welche einen kontinuierlichen oder sprunghaften, monotonen Eigenschaftsgradienten in der x,y-Ebene aufweist.

Die CN 110112425 beschreibt eine PEM-Brennstoffzelle mit einer Gasdiffusionslage, die eine Hydrophobierung des Fasermaterials entlang der Strömungskanäle mit einem Gradienten in der Haupt-Gasstromrichtung zwischen Einlass und Auslass aufweist. Zur Hydrophobierung wird bevorzugt PTFE eingesetzt. Dabei wird das Fasermaterial selbst hydrophobiert. In diesem Dokument ist nicht beschrieben, eine GDL einzusetzen, die eine MPL als zusätzliche Schicht aufweist, welche einen monotonen Eigenschaftsgradienten in der x,y-Ebene aufweist.

Aktuell besteht ein Bedarf an PEM-Brennstoffzellen, die hinsichtlich des beschriebenen komplexen Eigenschaftsprofils verbessert sind. Der vorliegenden Erfindung liegt die Aufgabe zugrunde, die Nachteile, die aus den Gradienten bezüglich der chemischen Zusammensetzung und/oder der Betriebsparameter zwischen der Zuführung und Abführung der Betriebsmedien resultieren, zu vermindern bzw. zu vermeiden. Die bereit gestellten Brennstoffzellen sollen sich dabei speziell durch möglichst geringe Schwankungen der Stromdichte über die aktive Fläche auszeichnen.

Überraschenderweise wurde nun gefunden, dass diese Aufgabe von einer Gasdiffusionslage für Brennstoffzellen gelöst wird, die ihrerseits wenigstens einen Eigenschaftsgradienten aufweist, wodurch die Verteilung der Betriebsmedien durch die GDL verbessert wird. Durch gezieltes Anpassen der GDL-Eigenschaften an die Gradienten der Betriebsmedien, wie sie von den Umgebungsbedingungen der Halbzellreaktionen vorgegeben werden, lässt sich die Leistung der Brennstoffzelle signifikant steigern. Insbesondere können die Schwankungen der Stromdichte über die aktive Fläche verringert werden.

### ZUSAMMENFASSUNG DER ERFINDUNG

Ein erster Gegenstand der Erfindung ist eine Gasdiffusionslage für eine Brennstoffzelle, umfassend
a) ein flächiges elektrisch leitfähiges Fasermaterial und
b) eine mikroporöse Lage auf einer der Flächen des Fasermaterials,
wobei die Gasdiffusionslage in Bezug auf ihre Grundfläche (in der x,y-Ebene) wenigstens einen Eigenschaftsgradienten bezüglich wenigstens einer chemischen und/oder physikalischen Eigenschaft aufweist.

In einer bevorzugten Ausführungsform weist zumindest die mikroporöse Lage wenigstens einen Eigenschaftsgradienten auf.

Ein weiterer Gegenstand der Erfindung ist ein Verfahren zur Herstellung einer Gasdiffusionslage für eine Brennstoffzelle, die ein flächiges elektrisch leitfähiges Fasermaterial a) und eine mikroporöse Lage b) auf einer der Flächen des Fasermaterials umfasst, wobei die mikroporöse Lage in Bezug auf die Grundfläche der Gasdiffusionslage (in der x,y-Ebene) wenigstens einen Eigenschaftsgradienten bezüglich wenigstens einer chemischen und/oder physikalischen Eigenschaft aufweist, bei dem man
i) ein flächiges elektrisch leitfähiges Fasermaterial a) bereitstellt,
ii) das in Schritt i) bereitgestellte Fasermaterial mit einem Precursor zur Ausbildung einer mikroporösen Lage beschichtet, wobei die Zusammensetzung des Precursors während des Beschichtens zur Erzeugung eines Gradienten variiert wird,
iii) das in Schritt ii) erhaltene beschichtete Fasermaterial einer thermischen Nachbehandlung unterzieht.

Ein weiterer Gegenstand der Erfindung ist eine Brennstoffzelle, die wenigstens eine Gasdiffusionslage, wie zuvor und im Folgenden definiert, umfasst.

Ein weiterer Gegenstand der Erfindung ist die Verwendung einer Gasdiffusionslage, wie zuvor und im Folgenden definiert, zur Herstellung von Brennstoffzellen mit verringerter Schwankung der Stromdichte über die Elektrodenflächen, speziell auf der Kathodenseite.

### BESCHREIBUNG DER ERFINDUNG

Die erfindungsgemäßen Brennstoffzellen haben folgende Vorteile:
- Durch den wenigstens einen Eigenschaftsgradienten, den die erfindungsgemäßen Gasdiffusionslagen aufweisen, können die Eigenschaften der GDL gezielt an die Betriebsbedingungen der jeweiligen Brennstoffhalbzelle angepasst werden. Die GDL zeichnet sich durch verbesserte Eigenschaften bezüglich der Verteilung der Betriebsstoffe aus. Speziell gelingt es, verschiedene Transportprozesse durch die GDL unabhängig voneinander zu steuern. So kann beispielsweise der Transport von flüssigem Wasser und von gasförmigem Wasser separat eingestellt werden. Auch der Sauerstofftransport durch die GDL zur Kathode lässt sich gezielt steuern.
- Die erfindungsgemäßen Gasdiffusionslagen lassen sich einfach und kostengünstig herstellen.
- Durch den Einsatz der erfindungsgemäßen Gasdiffusionslagen können in den resultierenden Brennstoffzellen Schwankungen der Stromdichte über die aktive Fläche verringert werden.

### Gasdiffusionslage (GDL)

Bei der erfindungsgemäß eingesetzten GDL handelt es sich um ein flächenförmiges Gebilde, das über eine im Wesentlichen zweidimensionale, ebene Ausdehnung und eine demgegenüber geringere Dicke verfügt. Die erfindungsgemäße Gasdiffusionslage weist eine Grundfläche auf, die in der Regel im Wesentlichen der Grundfläche der angrenzenden Membran mit den Katalysatorschichten und der Grundfläche der angrenzenden Strömungsverteilerplatte entspricht. Die Form der Grundfläche der Gasdiffusionslage kann beispielsweise polygonal (n-eckig mit n ≥ 3, z. B. dreieckig, viereckig, fünfeckig, sechseckig, etc.), kreisförmig, kreissegmentförmig (z. B. halbkreisförmig), ellipsenförmig oder ellipsensegmentförmig sein. Bevorzugt ist die Grundfläche rechteckig oder kreisförmig. Im Rahmen der Erfindung wird zur Beschreibung der GDL ein orthogonales Koordinatensystem verwendet, wobei die Grundfläche der GDL in der von der x-Achse und der y-Achse aufgespannten Ebene (auch als x,y-Ebene bezeichnet) liegt. Die dazu orthogonale z-Achse dient zur Beschreibung der Materialdicke. Gemäß der für Faserverbundmaterialien üblichen Beschreibung werden die x-Achse auch als Rollenrichtung (machine direction, MD) und die y-Achse als Gegenrollenrichtung (cross machine direction, CMD) beschrieben. In Richtung der z-Achse erfolgt im Wesentlichen der Stofftransport zwischen Strömungsverteilerplatte und Membran.

Die Gasdiffusionslage weist erfindungsgemäß wenigstens einen Eigenschaftsgradienten bezüglich wenigstens einer chemischen und/oder physikalischen Eigenschaft auf. Das heißt, wenigstens eine Eigenschaft der Gasdiffusionslage ist vom Ort abhängig. Der Eigenschaftsgradient kann sich über eine, zwei oder alle drei Raumrichtungen erstrecken. Er kann sich jeweils über die vollständige Längenausdehnung in einer Raumrichtung oder einen bestimmten Abschnitt erstrecken. Die Eigenschaftsänderung kann sprunghaft sein (d. h. die erfindungsgemäße Gasdiffusionslage weist eine Heterogenität bezüglich wenigstens einer Eigenschaft auf) oder kontinuierlich sein (d. h. die erfindungsgemäße Gasdiffusionslage weist eine Inhomogenität bezüglich wenigstens einer Eigenschaft auf). Eine sprunghafte Eigenschaftsänderung weist in der Regel wenigstens 2, bevorzugt wenigstens 3, insbesondere wenigstens 4 Stufen hinsichtlich der den Gradienten aufweisenden Eigenschaft auf. Sowohl das flächige Fasermaterial a), als auch die mikroporöse Lage b), als auch beide können den wenigstens einen Eigenschaftsgradienten aufweisen.

Bevorzugt weist zumindest die mikroporöse Lage wenigstens einen Eigenschaftsgradienten auf. Bevorzugt weisen zumindest die kathodenseitigen Gasdiffusionslagen der erfindungsgemäßen Brennstoffzellen eine MPL auf, die in Bezug auf die Grundfläche (in der x,y-Ebene) der GDL einen Eigenschaftsgradienten aufweist. Es wurde gefunden, dass durch den Einsatz einer MPL, die in Bezug auf die Grundfläche (in der x,y-Ebene) der GDL einen Eigenschaftsgradienten aufweist, eine gleichmäßigere Stromdichteverteilung der Brennstoffzelle erzielt werden kann. In einer speziellen Ausführungsform weist ausschließlich die mikroporöse Lage einen oder mehrere Eigenschaftsgradienten auf.

Bevorzugt weist die Gasdiffusionslage (d.h. das flächige Fasermaterial a) und/oder die mikroporöse Lage b)) wenigstens einen Eigenschaftsgradienten auf, der sich in Abhängigkeit vom Ort monoton ändert. Unter einer monotonen Eigenschaftsänderung wird verstanden, dass der Funktionswert, der die Eigenschaftsänderung repräsentiert entweder immer wächst oder immer fällt, wenn der Wert für die Ortskoordinate zunimmt. Dabei ist es zugelassen, dass der Funktionswert, der die Eigenschaftsänderung repräsentiert, im Verlauf der Ortskoordinate auch über einen Teilbereich oder über mehrere Teilbereiche gleich bleibt. Er weist jedoch keine lokalen Minima oder Maxima auf.

Bevorzugt weist die Gasdiffusionslage (d.h. nur das flächige Fasermaterial a) oder nur die mikroporöse Lage b) oder das flächige Fasermaterial a) und die mikroporöse Lage b)) nur Eigenschaftsgradienten auf, die sich in Abhängigkeit vom Ort monoton ändern.

Bevorzugt weist zumindest die mikroporöse Lage b) wenigstens einen Eigenschaftsgradienten auf, der sich in Abhängigkeit vom Ort monoton ändert. In einer speziellen Ausführungsform weist ausschließlich die mikroporöse Lage wenigstens einen Eigenschaftsgradienten auf, der sich in Abhängigkeit vom Ort monoton ändert. In einer weiteren speziellen Ausführungsform weist die mikroporöse Lage ausschließlich Eigenschaftsgradienten auf, die sich in Abhängigkeit vom Ort monoton ändern. Spezieller weist die mikroporöse Lage nur einen einzigen Eigenschaftsgradienten auf und ändert sich dieser eine Eigenschaftsgradient in Abhängigkeit vom Ort monoton.

Die Gasdiffusionslage umfasst als Komponente a) wenigstens ein elektrisch leitfähiges flächiges Fasermaterial. Bevorzugt umfasst die Komponente a) ein Fasermaterial, das ausgewählt ist unter Vliesen, Papieren, Geweben und Kombinationen davon. Geeignete Substratmaterialen sind Fasermaterialen, die selbst leitfähig sind oder durch Zugabe leitfähiger Additive, wie Kohlenstoff- oder Metallpartikel, leitfähig gemacht werden. Als Substratmaterial eignen sich prinzipiell Kohlenstofffasern, Glasfasern, Fasern organischer Polymere, wie Polypropylen, Polyester, Polyphenylensulfid, Polyetherketonen, und Mischungen davon. Die in dem Fasermaterial a) enthaltenen Fasern umfassen oder bestehen vorzugsweise aus Kohlenstofffasern (Kohlefasern, Carbonfasern). Solche Fasermaterialien erfüllen besonders vorteilhaft die Anforderung an die GDL nach Gasdiffusivität, Flüssigwasserpermeabilität, elektrischer und thermischer Leitfähigkeit.

Die Herstellung der Kohlenstofffasern kann in üblicher Weise erfolgen, wobei als Ausgangsmaterial vorzugsweise Polyacrylnitril-Fasern (PAN-Fasern) eingesetzt werden. PAN-Fasern werden hergestellt durch radikalische Polymerisation einer Monomerzusammensetzung, die vorzugsweise wenigstens 90 Gew.-%, bezogen auf das Gesamtgewicht der zur Polymerisation eingesetzten Monomere, Acrylnitril enthält. Die erhaltene Polymerlösung wird, z. B. durch Nassspinnen und Koagulation, zu Filamenten versponnen und zu Tauen zusammengefasst. Bevor dieser PAN-Precursor unter hohen Temperaturen zu Kohlenstoffasern umgewandelt wird, wird er in der Regel in einer sauerstoffhaltigen Atmosphäre bei erhöhten Temperaturen von etwa 180 bis 300 °C einer oxidativen Cyclisierung (auch kurz als Oxidation bezeichnet) unterzogen. Durch die dabei resultierende chemische Vernetzung wird die Formstabilität der Fasern verbessert. Anschließend erfolgt bei Temperaturen von wenigstens 1200 °C die eigentliche Pyrolyse zu Kohlenstofffasern. Für diese Pyrolyse können in Abhängigkeit von der Form des angestrebten Fasermaterials entweder die Ausgangsfasern oder bereits ein flächiges Fasermaterial eingesetzt werden. In Abhängigkeit von der Temperatur bei der Pyrolyse unterscheidet man zwischen Carbonisierung und Graphitisierung. Carbonisierung bezeichnet eine Behandlung bei etwa 1200 bis 1500 °C unter Inertgasatmosphäre, die zur Abspaltung flüchtiger Produkte führt. Durch Graphitisierung, d. h. Erhitzen auf etwa 2000 bis 3000 °C unter Inertgas, erhält man so genannte Hochmodul- oder Graphitfasern. Diese Fasern verfügen über eine hohe Reinheit, sind leicht, hoch fest und sehr gut leitfähig für Elektrizität und Wärme.

Das Fasermaterial a) ist vorzugsweise ausgewählt unter Kohlefaser-Geweben, Kohlefaser-Papieren und Kohlefaser-Vliesstoffen.

Bei Kohlefasergeweben wird das flächige Fasermaterial durch das Verkreuzen von zwei Fadensystemen, Kette (Kettfäden) und Schuss (Schussfäden), hergestellt. Wie bei Textilien werden Faserbündel flexibel, aber unlösbar miteinander verbunden. Zur Herstellung von Kohlefasergeweben werden vorzugsweise oxidierte, aber noch nicht karbonisierte oder graphitierte PAN-Fasern eingesetzt. Die Karbonisierung oder Graphitierung, um dem flächigen Fasermaterial elektrische Leitfähigkeit zu verleihen, erfolgt nach dem Weben.

Wie eingangs beschrieben, werden zur Herstellung von Kohlefaser-Papieren in der Regel oxidierte PAN-Fasern eingesetzt. Diese werden in an sich bekannter Weise zu Faserbruchstücken zerkleinert, aufgeschlämmt und analog zur Papierherstellung durch Sieben (Bütten) ein Fasergelege hergestellt und getrocknet. In einer bevorzugten Ausführung wird in das Papier zusätzlich wenigstens ein Bindemittel eingebracht. Geeignete Bindemittel sind z. B. Phenol-, Furan-, Polyimidharze, etc. Zum Einbringen des Bindemittels kann das Papier mit diesem imprägniert und das Bindemittel gegebenenfalls anschließend gehärtet werden. Nach dem Imprägnieren und Härten wird das Kohlefaser-Papier nochmals einer Karbonisierung/Graphitisierung unterzogen, um auch das Bindemittel in Verbindungen mit verbesserter elektrischer Leitfähigkeit zu überführen. In einer weiteren geeigneten Ausführung wird zur Bereitstellung des Fasermaterials a) ein gefülltes Kohlefaser-Papier eingesetzt. Die Herstellung erfolgt zunächst wie zuvor beschrieben, jedoch wird anstelle des Einbringens eines Bindemittels und der Karbonisierung/Graphitisierung ein Füllstoff aus einem Kohlenstoffmaterial in einem polymeren Binder in das noch feuchte Papier eingebracht. Speziell wird dazu ein Kohlenstoff-PTFE-Füllstoff eingesetzt. Durch diese Füllung wird die thermische und elektrische Leitfähigkeit so erhöht, dass eine Karbonisierung/Graphitisierung entfallen kann.

Zur Herstellung von Kohlefaser-Vliesstoffen können nicht oxidierte oder oxidierte PAN-Fasern eingesetzt werden. Diese können in einem ersten Schritt trocken zu einem Flor gelegt (kardiert) und anschließend zu einem Vlies verfestigt werden. Dies kann beispielsweise durch Wasserstrahlverfilzung (hydro-entangling) erfolgen, wobei die Karbonfasern orientiert, verschränkt und somit mechanisch stabilisiert werden. Gegebenenfalls kann die Dicke des verfestigten Vliesstoffs auf einen gewünschten Wert kalibriert werden. Vliese auf Basis nicht oxidierter PAN-Fasern werden nach dem Vlieslegen und Verfestigen zunächst der Oxidation bei erhöhter Temperatur und unter Sauerstoffatmosphäre und anschließend der Karbonisierung/Graphitisierung unter Inertgasatmosphäre unterzogen. Vliese auf Basis oxidierter PAN-Fasern werden nach dem Vlieslegen und Verfestigen nur einer Karbonisierung/Graphitisierung unterzogen. Optional kann in das Vlies zusätzlich wenigstens ein Bindemittel eingebracht und dieses gegebenenfalls anschließend gehärtet werden. Geeignete Bindemittel sind die für Kohlefaser-Papiere genannten, speziell Phenolharze. Das Einbringen des Bindemittels kann sich z. B. an die Karbonisierung/Graphitisierung anschließen und das erhaltene imprägnierte Vlies abschließend nochmals karbonisiert/graphitisiert werden.

In einer speziellen Ausführungsform umfasst das flächige elektrisch leitfähige Fasermaterial a) wenigstens einen Kohlefaser-Vliesstoff. Diese sind unter Anderem vorteilhaft, da sie kompressionselastisch sind und einfach großtechnisch, z. B. in einem Rolle-zu-Rolle-Verfahren, hergestellt werden können.

Bei dem Fasermaterial a) handelt es sich in der Regel um einen Faserverbundwerkstoff, umfassend:
a1) Kohlenstofffasern,
a2) gegebenenfalls wenigstens ein polymeres Bindemittel und/oder ein Pyrolyseprodukt davon,
a3) gegebenenfalls wenigstens ein weiteres, von a2) verschiedenes Additiv.

Die in der Gasdiffusionslage enthaltenen Fasermaterialien a) können übliche Additive a3) enthalten. Diese sind vorzugsweise ausgewählt unter Hydrophobisierungsmitteln, leitfähigkeitsverbessernden Additiven, oberflächenaktiven Substanzen und Mischungen davon.

Um die Transportvorgänge durch die GDL und an den Grenzflächen zu verbessern, kann es vorteilhaft sein, die Hydrophobizität des Fasermaterials a) zu erhöhen. Geeignete Hydrophobisierungsmittel sind fluorhaltige Polymere, wie Polytetrafluorethylen (PTFE) und Tetrafluorethylen-Hexafluorpropylen-Copolymere (FEP). Bevorzugt wird als Hydrophobisierungsmittel PTFE eingesetzt. Das Fasermaterial kann durch übliche Imprägnierungsverfahren mit dem Hydrophobierungsmittel ausgerüstet werden. Dazu kann eine PTFE-Dispersion in einem Tauchbad appliziert, das Lösungsmittel verdampft und das behandelte Fasermaterial bei erhöhten Temperaturen von in der Regel wenigstens 300 °C gesintert werden.

Bevorzugt weist das Fasermaterial a) einen Gehalt an Hydrophobierungsmitteln von 3 bis 40 Gew.-%, bezogen auf das Gesamtgewicht des Fasermaterials a), auf. In einer speziellen Ausführungsform weist das Fasermaterial einen Gehalt an PTFE von 3 bis 40 Gew.-%, bezogen auf das Gesamtgewicht des Fasermaterials a), auf.

Zur Verbesserung der elektrischen und der thermischen Leitfähigkeit kann das Fasermaterial a) mit wenigstens einem leitfähigkeitsverbessernden Additiv ausgerüstet werden. Geeignete leitfähigkeitsverbessernde Additive sind z. B. Metallpartikel, Kohlenstoffpartikel, etc. Bevorzugt ist das leitfähigkeitsverbessernde Additiv ausgewählt unter Ruß, Graphit, Graphen, Kohlenstoffnanoröhren (CNT), Kohlenstoffnanofasern und Mischungen davon. Die Ausrüstung des Fasermaterials a) mit wenigstens einem leitfähigkeitsverbessernden Additiv kann beispielsweise gemeinsam mit dem Hydrophobierungsmittel, speziell einer PTFE-Dispersion, erfolgen. Vielfach verfügt das Fasermaterial a) durch die eingesetzten Kohlenstofffasern auch ohne leitfähigkeitsverbessernde Additive über eine gute elektrische und thermische Leitfähigkeit.

Bevorzugt weist das Fasermaterial a) einen Gehalt an leitfähigkeitsverbessernden Additiven von 0 bis 40 Gew.-%, bezogen auf das Gesamtgewicht des Fasermaterials a), auf. Wenn das Fasermaterial a) ein leitfähigkeitsverbesserndes Additiv enthält, dann vorzugsweise in einer Menge von 0,1 bis 40 Gew.-%, besonders bevorzugt von 0,5 bis 30 Gew.-%, bezogen auf das Gesamtgewicht des Fasermaterials a), auf.

Das Fasermaterial a) weist vorzugsweise eine Dicke im Bereich von 50 bis 500 µm, besonders bevorzugt von 100 bis 400 µm auf. Diese Dicke bezieht sich auf den unkomprimierten Zustand des Fasermaterials a), d. h. vor dem Einbau der GDL in eine Brennstoffzelle.

Das Fasermaterial a) weist vorzugsweise eine Porosität im Bereich von 10 bis 90 %, besonders bevorzugt von 20 bis 85 %, auf. Die Porosität des Fasermaterials lässt sich bei bekannter Faserdichte aus der gemessenen Dicke und dem gemessenen Flächengewicht berechnen. So gilt für eine Kohlenstoff-Faserdichte von 1,8 g/cm³: Porosität [%] = [(1,8-Flächengewicht/Dicke)/1,8] x 100. Weiterhin besteht die Möglichkeit, die Dichte der Gasdiffusionslage per Helium-Dichtemessung und das spezifische Porenvolumen per Quecksilber-Porosimetrie zu bestimmen. Die Porosität berechnet sich dann wie folgt: Porosität [%] = spezifisches Porenvolumen / (spezifisches Porenvolumen + 1 / He-Dichte) x 100 %.]

Der mittlere Porendurchmesser des Fasermaterials a) liegt vorzugsweise in einem Bereich von 5 bis 60 µm, besonders bevorzugt von 8 bis 50 µm, insbesondere von 10 bis 40 µm. Die Bestimmung des mittleren Porendurchmessers kann durch Quecksilber-Porosimetrie erfolgen.

Die erfindungsgemäße Gasdiffusionslage besteht aus einem zweilagigen Schichtverbund auf Basis eines flächigen, elektrisch leitfähigen Fasermaterials a) und einer mikroporösen Lage (MPL) b) auf einer der Flächen des Fasermaterials a).

Im Gegensatz zum makroporösen Fasermaterial a) ist die MPL mikroporös mit Porendurchmessern, die in der Regel deutlich unter einem Mikrometer liegen, bevorzugt von höchstens 900 nm, besonders bevorzugt von höchstens 500 nm, insbesondere von höchstens 300 nm. Der mittlere Porendurchmesser der MPL b) liegt vorzugsweise in einem Bereich von 5 bis 200 nm, besonders bevorzugt von 10 bis 100 nm. Die Bestimmung des mittleren Porendurchmessers kann wiederum durch Quecksilber-Porosimetrie erfolgen. Die zuletzt genannten mittleren Porendurchmesser gelten vor allem für den Einsatz von Ruß als leitfähige Partikel in der MPL. Durch den Einsatz von Graphit als leitfähige Partikel in der MPL oder den Einsatz von Porenbildnern lassen sich auch deutlich größere MPL-Poren erzeugen. Je nach Zusammensetzung ist der mittlere Porendurchmesser dann z. B. größer als 1 µm. Bei Einsatz verschiedener leitfähiger Partikel kann der Porendurchmesser eine bimodale oder polymodale Verteilungskurve aufweisen. So kann beim Einsatz einer Mischung aus Ruß und Graphit eine Verteilung des Porendurchmessers mit zwei Porenpeaks (ein Ruß- und ein Graphit-Peak) erhalten werden.

Die MPL enthält leitfähige Kohlenstoffpartikel, vorzugsweise Ruß oder Graphit, in einer Matrix aus einem polymeren Binder. Bevorzugte Binder sind die zuvor genannten fluorhaltigen Polymere, speziell Polytetrafluorethylen (PTFE).

Die mikroporöse Lage b) weist vorzugsweise eine Dicke im Bereich von 10 bis 100 µm, besonders bevorzugt von 20 bis 50 µm auf. Diese Dicke bezieht sich auf den unkomprimierten Zustand der mikroporösen Lage b), d. h. vor dem Einbau der GDL in eine Brennstoffzelle.

Das Vorhandensein der MPL hat einen großen Einfluss auf den Wasserhaushalt der Brennstoffzelle. Aufgrund des hohen PTFE-Anteils und der kleineren Poren der MPL wird die Flutung der GDL und der Elektrode erschwert, indem die MPL als Flüssigwasserbarriere fungiert und somit den Massentransport der gasförmigen Reaktanden an den Katalysator begünstigt. Es hat sich gezeigt, dass es vorteilhaft sein kann, wenn in der erfindungsgemäßen Gasdiffusionslage die mikroporöse Lage einen Eigenschaftsgradienten in Bezug auf ihre Grundfläche (in der x,y-Ebene) der GDL aufweist.

Die erfindungsgemäße Gasdiffusionslage weist vorzugsweise eine Dicke (Gesamtdicke aus Fasermaterial a) und MPL b)) im Bereich von 80 bis 1000 µm, besonders bevorzugt von 100 bis 500 µm auf. Diese Dicke bezieht sich auf den unkomprimierten Zustand der GDL, d. h. vor ihrem Einbau in eine Brennstoffzelle.

Weiterhin besitzen die Gasdiffusionsschichten bevorzugt eine hohe Gesamtporosität. Diese liegt vorzugsweise im Bereich von 20 % bis 80%, bestimmt, wie zuvor beschrieben, durch Helium-Dichtemessung und Quecksilber-Porosimetrie.

### Eigenschaftsgradient

Wie zuvor erwähnt, können sowohl das flächige Fasermaterial a), als auch die mikroporöse Lage b), als auch beide wenigstens einen Eigenschaftsgradienten aufweisen.

Die Eigenschaft, die den Gradienten aufweist, ist prinzipiell ausgewählt unter
- der chemischen Zusammensetzung des flächigen Fasermaterials a) und/oder der mikroporösen Lage b),
- den mechanischen Eigenschaften des flächigen Fasermaterials a) und/oder der mikroporösen Lage b),
- den Transporteigenschaften des flächigen Fasermaterials a) und/oder der mikroporösen Lage b),
- Kombinationen davon.

Zu den chemischen Eigenschaften des flächigen Fasermaterials a) und/oder der mikroporösen Lage b), die einen Gradienten aufweisen können, zählen z. B. der Gehalt an Hydrophobierungsmitteln, Kohlenstoffpartikeln, etc. Dazu zählt speziell der Gehalt an PTFE, Ruß, Graphit, Graphen, Kohlenstoffnanoröhren (CNT), Kohlenstoffnanofasern und Mischungen davon.

Zu den mechanischen Eigenschaften des flächigen Fasermaterials a) und/oder der mikroporösen Lage b), die einen Gradienten aufweisen können, zählen z. B. die Dichte, die flächenbezogene Masse, die Porosität und der mittlere Porendurchmesser.

Die Bestimmung der Dichte in g/m³ kann durch Helium-Dichtemessung, wie zuvor beschrieben, erfolgen.

Die Bestimmung der flächenbezogenen Masse in g/m² kann nach ISO 9073-1 bzw. EN 29073-1:1992 erfolgen.

Die Porosität der GDL kann mittels verschiedener bekannter Messverfahren, wie z. B. Quecksilber-Porosimetrie oder Stickstoff-BET-Verfahren, bestimmt werden.

Zur Erzeugung eines Gradienten bei den mechanischen Eigenschaften kann man beispielsweise das Kompressionsverhalten der mikroporösen Schicht mit einem Gradienten versehen, indem man deren Zusammensetzung bezüglich wenigstens eines ihrer Materialen variiert. Dadurch ändert sich auch die Anbindung an die Elektrode. Alternativ kann ein Gradient bei den mechanischen Eigenschaften erzeugt werden, indem man bei der Vliesverfestigung durch Wasserstrahlen einen Gradienten über die Materialbreite erzeugt. Dadurch werden mechanische Eigenschaften und der Wassertransport beeinflusst.

Zu den Transporteigenschaften des flächigen Fasermaterials a) und/oder der mikroporösen Lage b), die einen Gradienten aufweisen können, zählen:
- die Gaspermeabilität des flächigen Fasermaterials a) und/oder der mikroporösen Lage b),
- die Flüssigkeitspermeabilität des flächigen Fasermaterials a) und/oder der mikroporösen Lage b),
- der elektrische Durchgangswiderstand der Gasdiffusionslage durch die Materialebene,
- der thermische Durchgangswiderstand der Gasdiffusionslage durch die Materialebene,
- die trockene Diffusionslänge.

Die Gaspermeabilität senkrecht zur Materialebene kann über eine Gurley-Messung ermittelt werden, für die ein automatisiertes Gurley-Densometer der Firma Gurley Precision Instruments verwendet kann. Bei der Messung wird die Zeit in Sekunden ermittelt, bis 100 cm³ Luft bei konstanter Druckdifferenz senkrecht durch die GDL-Probe mit einer durchströmten Probenfläche von 6,42 cm² geströmt sind. Die Bestimmung der Luftdurchlässigkeit nach Gurley ist in der ISO 5636-5 beschrieben.

Die Messung der Gaspermeabilität in l/m² s kann auch nach DIN EN ISO 9237:1995-12 zur Bestimmung der Luftdurchlässigkeit von textilen Flächengebilden erfolgen.

Die Permeabilität für Flüssigkeiten, speziell für flüssiges Wasser, senkrecht zur Materialebene (Flüssig-Wasser-Permeabilität "through-plane") kann mit einer sogenannten "Filtration cell" oder nach der "Penn State"-Methode bestimmt werden [siehe Literaturstellen a - c]: [a] I. S. Hussaini and C. Y. Wang, "Measurement of relative permeability of fuel cell diffusion media," Journal of Power Sources, vol. 195, pp. 3830-3840, 2010; [b] J. D. Sole, "Investigation of water transport parameters and processes in the gas diffusion layer of PEMFCs," Virginia Polytechnic Institute, 2008; [c] J. Benziger, J. Nehlsen, D. Blackwell, T. Brennan, and J. Itescu, "Water flow in the gas diffusion layer of PEM fuel cells," Journal of Membrane Science, vol. 261, pp. 98-106, 2005.

Für die Bestimmung des elektrischen Widerstandes durch die Ebene (through plane, TP) kann ein literaturbekanntes Verfahren mit der Bezeichnung Quasi-4-Punkt-Messung genutzt werden. Eine separate Erfassung des Durchgangswiderstands der MPL ist mit dieser Methode nicht möglich.

Für die Bestimmung des thermischen Widerstandes durch die Ebene (through plane, TP) können zwei bekannte Prüfverfahren verwendet werden, das Heat-Flow-Verfahren oder die Laser-Flash-Methode.

Die trockene Diffusionslänge bezeichnet die tatsächliche Länge der Strecke, die ein Gasmolekül durch das flächige Fasermaterial a) und/oder die mikroporöse Lage b) in µm zurücklegt. Sie wird bestimmt mittels stationärer Wicke-Kallenbach-Zelle.

In einer bevorzugten Ausführungsform weist die mikroporöse Lage (MPL) wenigstens einen Eigenschaftsgradienten bezüglich wenigstens einer chemischen und/oder physikalischen Eigenschaft auf. Die MPL weist den wenigstens einen Eigenschaftsgradienten in Bezug auf ihre Grundfläche, d. h. in der Draufsicht bzw. in der x,y-Ebene, auf. Gegebenenfalls kann die MPL zusätzlich einen Eigenschaftsgradienten senkrecht zu ihrer Grundfläche, d. h. in Richtung der z-Achse, aufweisen.

Bevorzugt weist die mikroporöse Lage wenigstens 2, vorzugsweise wenigstens 3, insbesondere wenigstens 4, speziell wenigstens 5, spezieller wenigstens 6 diskrete Bereiche auf, die sich in wenigstens einer Eigenschaft unterscheiden. In dieser Ausführung ist Eigenschaftsänderung zwischen den Bereichen sprunghaft. Die einzelnen Bereiche können sich alle hinsichtlich derselben Eigenschaft oder (bei mehreren unterschiedlichen Eigenschaften) denselben Eigenschaften unterscheiden. Dies ist bevorzugt. Es ist jedoch auch möglich, dass sich zwei oder mehrere Bereiche hinsichtlich verschiedener Eigenschaften unterscheiden. In einer speziellen Ausführungsform weist die mikroporöse Lage wenigstens 2, vorzugsweise wenigstens 3, insbesondere wenigstens 4, speziell wenigstens 5, spezieller wenigstens 6 diskrete Bereiche auf, die sich alle hinsichtlich ein und derselben Eigenschaft unterscheiden.

In einer speziellen Ausführung ist jeder einzelne Bereich bezüglich seiner Eigenschaften im Wesentlichen homogen. Unter im Wesentlichen homogen wird dabei verstanden, dass innerhalb eines Bereichs nur solche Eigenschaftsschwankungen auftreten, wie sie auch dann (z. B. herstellungsbedingt) auftreten, wenn nicht bewusst ein Gradient erzeugt wird.

In einer alternativen Ausführungsform weist die mikroporöse Lage wenigstens einen kontinuierlichen Eigenschaftsgradienten auf.

Bevorzugt weist die mikroporöse Lage wenigstens 2, vorzugsweise wenigstens 3, insbesondere wenigstens 4 lateral aneinandergrenzende Streifen auf, die sich in wenigstens einer Eigenschaft unterscheiden. In einer speziellen Ausführungsform weist die mikroporöse Lage wenigstens 2, vorzugsweise wenigstens 3, insbesondere wenigstens 4 lateral aneinandergrenzende Streifen auf, die sich alle hinsichtlich ein und derselben Eigenschaft unterscheiden. Speziell ist jeder einzelne Streifen bezüglich seiner Eigenschaften im Wesentlichen homogen.

Bevorzugt ist die Eigenschaft der mikroporösen Lage, die einen Gradienten aufweist, ausgewählt unter
- der Gaspermeabilität nach Gurley und
- der trockenen Diffusionslänge.

### Verfahren zur Herstellung einer Gasdiffusionslage

Ein weiterer Gegenstand der Erfindung ist ein Verfahren zur Herstellung einer Gasdiffusionslage für eine Brennstoffzelle, die ein flächiges elektrisch leitfähiges Fasermaterial a) und eine mikroporöse Lage b) auf einer der Flächen des Fasermaterials umfasst, wobei die mikroporöse Lage in Bezug auf die Grundfläche der Gasdiffusionslage (in der x,y-Ebene) wenigstens einen Eigenschaftsgradienten bezüglich wenigstens einer chemischen und/oder physikalischen Eigenschaft aufweist, bei dem man
i) ein flächiges elektrisch leitfähiges Fasermaterial a) bereitstellt,
ii) das in Schritt i) bereitgestellte Fasermaterial mit einem Precursor zur Ausbildung einer mikroporösen Lage beschichtet, wobei die Zusammensetzung des Precursors während des Beschichtens zur Erzeugung eines Gradienten variiert wird,
iii) das in Schritt ii) erhaltene beschichtete Fasermaterial einer thermischen Nachbehandlung unterzieht.

Bezüglich der in Schritt i) eingesetzten geeigneten und bevorzugten Fasermaterialien a) wird auf die vorherigen Ausführungen in vollem Umfang Bezug genommen.

Die in Schritt b) eingesetzten Precursoren enthalten vorzugsweise wenigstens ein fluorhaltiges Polymer, wenigstens ein Kohlenstoffmaterial und gegebenenfalls wenigstens einen Porenbildner. Die fluorhaltigen Polymere sind vorzugsweise ausgewählt unter Polytetrafluorethylen (PTFE) und Tetrafluorethylen-Hexafluorpropylen-Copolymeren (FEP). Bevorzugt wird PTFE eingesetzt. Bevorzugt ist das Kohlenstoffmaterial ausgewählt unter Ruß, Graphit, Graphen, Kohlenstoffnanoröhren (CNT), Kohlenstoffnanofasern und Mischungen davon. Bevorzugt wird Ruß oder Graphit eingesetzt. In einer speziellen Ausführung enthalten die in Schritt b) eingesetzten Precursoren wenigstens einen Porenbildner. Geeignete Porenbildner sind kommerziell erhältliche Kunststoffpartikel, z. B. aus Polymethylmethacrylat (PMMA). Eine geeignete Teilchengröße liegt im Bereich von 10 bis 100 µm.

Bevorzugt beträgt der Volumenanteil der Poren in der fertigen mikroporösen Schicht, der auf den Einsatz eines Porenbildners zurückzuführen ist, 0 bis 70 Volumen-%, bezogen auf das Gesamtvolumen der Poren in der fertigen mikroporösen Schicht.

Bevorzugt wird das Fasermaterial a) mit wenigstens 2, bevorzugt wenigstens 3, insbesondere wenigstens 4 lateral aneinandergrenzenden Streifen von Precursoren unterschiedlicher Zusammensetzung zur Ausbildung einer mikroporösen Lage beschichtet. Auftragen der MPL kann auf verschiedene Arten erfolgen. Während in einer diskontinuierlichen Herstellung häufig Sprüh-, Siebdruck- oder Meyer-Rod-Verfahren eingesetzt werden, kommen bei der kontinuierlichen Beschichtung bevorzugt Rakel-, Schlitzdüsen- und Gravurwalzenprozesse zum Einsatz. Dabei können die MPL-Schichtdicke und die Eindringtiefe durch die Beschichtungsprozessparameter sowie die Viskosität der Beschichtung beeinflusst werden. Abschließend erfolgt eine erneute thermische Behandlung, z. B. in einem Trocknungs- und Sinterofen. Dabei kann zunächst eine Trocknung bei einer Temperatur von 100 bis 200 °C und anschließend eine Sinterung bei einer Temperatur von 300 bis 500 °C erfolgen.

### Brennstoffzelle

Ein weiterer Gegenstand der Erfindung ist eine Brennstoffzelle, umfassend wenigstens eine Gasdiffusionslage, wie zuvor definiert oder erhältlich durch ein Verfahren, wie zuvor definiert.

Prinzipiell eignet sich die erfindungsgemäße Gasdiffusionslage für alle üblichen Brennstoffzelltypen, speziell Niedertemperatur-Protonenaustauschmembran-Brennstoffzellen (PEMFC). Auf die zuvor gemachten Ausführungen zum Aufbau von Brennstoffzellen wird in vollem Umfang Bezug genommen.

Es ist ein Vorteil der Erfindung, dass die Transportprozesse durch die Gasdiffusionslage gezielt an die Gradienten der durch die Brennstoffzelle strömenden Betriebsmedien und/oder der Betriebsparameter der Brennstoffzelle angepasst werden können. Dazu korrespondiert in der Regel wenigstens ein Eigenschaftsgradient der Gasdiffusionslage mit wenigstens einem der Eigenschaftsgradienten der durch die Brennstoffzelle strömenden Betriebsmedien und/oder der Betriebsparameter der Brennstoffzelle.

### FIGURENBESCHREIBUNG

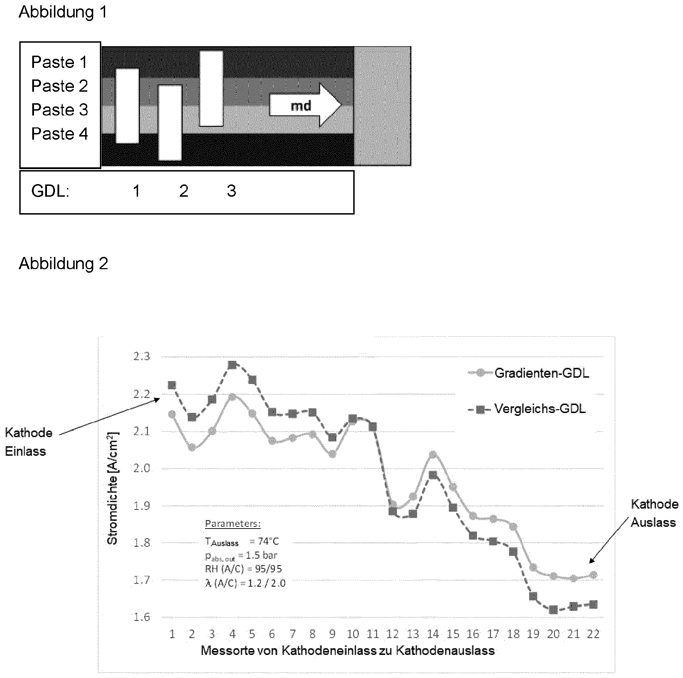

Abbildung 1 zeigt die Draufsicht auf ein GDL-Material, dessen Herstellung in Beispiel 1 beschrieben ist. Auf ein Faservlies im DIN A3-Format (29,7 x 42 cm, wobei md die Maschinenrichtung bezeichnet) wurden in Längsrichtung 4 lateral aneinandergrenzende Streifen mit 4 verschiedenen MPL-Pasten (Paste 1 bis 4) in einer Breite von jeweils 7 bis 8 cm aufgetragen. Aus dem getrockneten und gesinterten Material wurden Gasdiffusionslagen im Format 274,8 x 96,5 mm mit der langen Seite quer zur Maschinenrichtung ausgestanzt. Abbildung 1 zeigt 3 alternative Stanzpositionen (GDL 1 bis 3). Die erhaltenen GDL weisen einen Eigenschaftsgradienten in Richtung der x-Achse auf, wobei GDL 1 über 4 Streifen mit jeweils unterschiedlichen Eigenschaften und die GDL 2 und 3 je über 3 Streifen mit unterschiedlichen Eigenschaften verfügen.

Abbildung 2 zeigt die gemäß Beispiel 2 ermittelte Stromdichteverteilung an der Kathode einer erfindungsgemäßen Membran-Elektroden-Einheit mit einer MPL, die einen Eigenschaftsgradienten aufweist (Kreise), und einer nicht erfindungsgemäßen Membran-Elektroden-Einheit ohne Eigenschaftsgradienten (Quadrate).

Die folgenden Beispiele dienen der Erläuterung der Erfindung, ohne sie in irgendeiner Weise zu beschränken.

### BEISPIELE

### Beispiel 1:

Herstellung einer Gasdiffusionslage mit Eigenschaftsgradient in x-Richtung

Von einem kommerziell erhältlichen elektrisch leitfähigen Faservlies mit einer Dicke von 0,145 mm, einem Flächengewicht von 60 g/m² und einem Durchgangswiderstand (through plane) bei 1 MPa Verpressung von 6,6 mΩcm² wurden Blätter im DIN A3-Format (29,7 x 42 cm) in Längsrichtung (Maschinenrichtung, md) von der GDL-Rolle ausgestanzt und einzeln beschichtet. Zur Erzeugung einer mikroporösen Schicht mit einem Eigenschaftsgradienten wurden in Längsrichtung des Faservlieses 4 lateral aneinandergrenzende Streifen mit MPL-Pasten in einer Breite von jeweils 7 bis 8 cm aufgetragen (siehe Figur 1). Die Pasten hatten eine Zusammensetzung gemäß Tabelle 1. Zu ihrer Herstellung wurden PTFE, verschiedene Kohlenstoffe und Kunststoffpartikel als Porenbildner in destilliertem Wasser dispergiert und durch Rakeln auf das Faservlies aufgetragen. Anschließend wurden die Blätter bei 160 °C getrocknet und bei 400 °C gesintert. Die resultierenden MPL-Beladungen betrugen je nach Streifen 15 bis 22 g/m².

**Tabelle 1**

| | PTFE [Gew.-%]¹⁾ | Kohlenstoff [Gew.-%]¹⁾ | Porenbildner [Gew.-%]¹⁾ | Feststoffanteil [Gew.-%]¹⁾ |
|---|---|---|---|---|
| Paste 1 | 2,3 | 9,3 | 0 | 11,6 |
| Paste 2 | 1,9 | 7,7 | 0,2 | 9,8 |
| Paste 3 | 2,1 | 8,3 | 0,4 | 10,8 |
| Paste 4 | 2,1 | 8,4 | 0,4 | 10,9 |

| | | | | |
|---|---|---|---|---|
| 1) jeweils bezogen auf das Gesamtgewicht der Paste | | | | |

Aus den erhaltenen Blättern wurden Gasdiffusionslagen im Format 274,8 x 96,5 mm mit der langen Seite quer zur Maschinenrichtung ausgestanzt. Figur 1 zeigt 3 alternative Stanzpositionen. Die erhaltenen GDL weisen einen Eigenschaftsgradienten in Richtung der x-Achse auf, wobei GDL 1 über 4 Streifen mit jeweils unterschiedlichen Eigenschaften und die GDL 2 und 3 je über 3 Streifen mit unterschiedlichen Eigenschaften verfügen.

Zur Herstellung einer Brennstoffzelle, wie im Folgenden beschrieben, werden die GDL so verbaut, dass die x-Richtung (lange Seite) in der Richtung der direkten Verbindung zwischen Zuführung und Abführung der Betriebsstoffe zur Strömungsverteilerplatte liegt. Bei einer Strömungsverteilerplatte mit geraden Kanälen liegt somit die lange Seite der GDL parallel zu den Gaskanälen. Aber auch bei einem anderen Flowfield-Design kommt auf der Kathodenseite (Luftseite) der Brennstoffzelle der zugeführte O₂-reiche Brennstoff zuerst mit der von Paste 1 gebildeten MPL und der abgeführte O₂-arme Brennstoff mit der von Paste 4 gebildeten MPL in Kontakt.

Bei der GDL 1 gemäß Abbildung 1 wurde für jeden der 4 Streifen die Gurley-Gaspermeabilität senkrecht zur Materialebene mit einem Gurley-Densometer der Firma Gurley Precision Instruments gemäß ISO 5636-5 bestimmt. Die Ergebnisse sind Tabelle 2 zu entnehmen.

Bei der GDL 1 gemäß Abbildung 1 wurde zudem für jeden der 4 Streifen die trockene Diffusionslänge mit Hilfe einer stationären Wicke-Kallenbach-Zelle bestimmt. Die Ergebnisse sind ebenfalls Tabelle 2 zu entnehmen.

**Tabelle 2**

| Streifen aus | trockene Diffusionslänge [µm] | Luftpermeabilität(Gurley) [s] |
|---|---|---|
| Paste 1 | 747 | 23,6 |
| Paste 2 | 607 | 4,2 |
| Paste 3 | 560 | 2,0 |
| Paste 4 | 522 | 1,6 |

### Beispiel 2:

### Messung der Stromdichteverteilung

Für eine in-situ-Messung der Stromdichteverteilung wurde zum einen eine erfindungsgemäße Membran-Elektroden-Einheit (MEA) eingesetzt, deren Kathode auf einer Gasdiffusionslage (GDL) beruhte, deren mikroporöse Schicht (MPL) einen Eigenschaftsgradienten in Längsrichtung des Faservlieses aus 4 lateral aneinandergrenzenden Streifen aufwies (GDL 1 aus Beispiel 1). Als Anode wurde eine herkömmliche GDL eingesetzt, deren MPL keinen Eigenschaftsgradienten aufwies. Zur ihrer Herstellung wurde die MPL-Paste 4 aus Beispiel 1 eingesetzt. Zum Vergleich diente eine MEA, deren Anode und Kathode eine nicht erfindungsgemäße GDL (ohne Eigenschaftsgradienten) analog zur Anode der erfindungsgemäßen MEA aufwies.

In dem Testsystem wurden der MEA Wasserstoff und Sauerstoff mit einem Druck von jeweils 1,5 bar zugeführt, die relative Feuchte (RH) beider Gase vor Eintritt in die Messanordnung betrug jeweils 95% und die Betriebstemperatur der Brennstoffzelle lag bei 74°C (Kühlmitteltemperatur am Auslass der Kathode). Die überschüssige Wasserstoffzufuhr λ_{A} betrug 1,2 die Menge an überschüssigem O₂ λ_{C} betrug 2,0. Es wurde die Stromdichteverteilung an der Kathode bei einem Mittelwert der abgegriffenen Stromdichte von 1,8 A/cm² mit einer Matrix von Messstellen bestimmt, die 22 Messorte im Verlauf der Hauptstromrichtung des Gases zwischen Kathodeneingang und Kathodenausgang sowie 9 Messorte senkrecht zur Hauptstromrichtung des Gases aufwies (d.h. 198 Messpunkte insgesamt).

Abbildung 2 zeigt die ermittelte Stromdichteverteilung an der Kathode der erfindungsgemäßen (Kurve mit kreisförmigen Symbolen) und nicht erfindungsgemäßen (Kurve mit quadratischen Symbolen) MEA. Die Kurven zeigen für jeden Messort 1 bis 22 in Hauptstromrichtung des Gases die Mittelwerte über die 9 Messorte senkrecht zur Hauptstromrichtung des Gases. Es zeigt sich, dass die erfindungsgemäße GDL eine gleichmäßigere Stromdichteverteilung aufweist als die Vergleichs-GDL.

## Patentansprüche

1. Gasdiffusionslage für eine Brennstoffzelle, umfassend
a) ein flächiges elektrisch leitfähiges Fasermaterial und
b) eine mikroporöse Lage auf einer der Flächen des Fasermaterials,
wobei die Gasdiffusionslage in Bezug auf ihre Grundfläche (in der x,y-Ebene) wenigstens einen Eigenschaftsgradienten bezüglich wenigstens einer chemischen und/oder physikalischen Eigenschaft aufweist.

2. Gasdiffusionslage nach Anspruch 1, wobei die mikroporöse Lage wenigstens einen Eigenschaftsgradienten aufweist.

3. Gasdiffusionslage nach Anspruch 1 oder 2, wobei die mikroporöse Lage einen kontinuierlichen oder sprunghaften Eigenschaftsgradienten aufweist, der sich in Abhängigkeit vom Ort monoton ändert.

4. Gasdiffusionslage nach Anspruch 2 oder 3, wobei die mikroporöse Lage wenigstens 2, vorzugsweise wenigstens 3, insbesondere wenigstens 4 Bereiche aufweist, die sich in wenigstens einer Eigenschaft unterscheiden.

5. Gasdiffusionslage nach einem der Ansprüche 2 bis 4, wobei die mikroporöse Lage wenigstens 2, vorzugsweise wenigstens 3, insbesondere wenigstens 4 lateral aneinandergrenzende Streifen aufweist, die sich in wenigstens einer Eigenschaft unterscheiden.

6. Gasdiffusionslage nach Anspruch 5, wobei jeder einzelne Streifen bezüglich seiner Eigenschaften im Wesentlichen homogen ist.

7. Gasdiffusionslage nach einem der vorhergehenden Ansprüche, wobei die Eigenschaft, die einen Gradienten aufweist, ausgewählt ist unter
- der chemischen Zusammensetzung des flächigen Fasermaterials a) und/oder der mikroporösen Lage b),
- den mechanischen Eigenschaften des flächigen Fasermaterials a) und/oder der mikroporösen Lage b),
- den Transporteigenschaften des flächigen Fasermaterials a) und/oder der mikroporösen Lage b),
- Kombinationen davon.

8. Verfahren zur Herstellung einer Gasdiffusionslage für eine Brennstoffzelle, die ein flächiges elektrisch leitfähiges Fasermaterial a) und eine mikroporöse Lage b) auf einer der Flächen des Fasermaterials umfasst, wobei die mikroporöse Lage in Bezug auf die Grundfläche der Gasdiffusionslage (in der x,y-Ebene) wenigstens einen Eigenschaftsgradienten bezüglich wenigstens einer chemischen und/oder physikalischen Eigenschaft aufweist, bei dem man
i) ein flächiges elektrisch leitfähigen Fasermaterial a) bereitstellt,
ii) das in Schritt i) bereitgestellte Fasermaterial mit einem Precursor zur Ausbildung einer mikroporösen Lage beschichtet, wobei die Zusammensetzung des Precursors während des Beschichtens zur Erzeugung eines Gradienten variiert wird,
iii) das in Schritt ii) erhaltene beschichtete Fasermaterial einer thermischen Nachbehandlung unterzieht.

9. Verfahren nach einem der Anspruch 8, wobei die Zusammensetzung des Precursors während des Beschichtens so variiert wird, dass die mikroporöse Lage in Bezug auf die Grundfläche der Gasdiffusionslage (in der x,y-Ebene) wenigstens einen monotonen Eigenschaftsgradienten aufweist.

10. Verfahren nach Anspruch 8 oder 9, wobei der in Schritt ii) eingesetzte Precursor wenigstens ein fluorhaltiges Polymer, wenigstens ein Kohlenstoffmaterial und gegebenenfalls wenigstens einen Porenbildner umfasst.

11. Verfahren nach einem der Ansprüche 8 bis 10, wobei das Fasermaterial mit wenigstens 2 lateral aneinandergrenzenden Streifen eines Precursors zur Ausbildung einer mikroporösen Lage beschichtet ist.

12. Brennstoffzelle, umfassend wenigstens eine Gasdiffusionslage, wie in einem der Ansprüche 1 bis 7 definiert, oder erhältlich durch ein Verfahren, wie in einem der Ansprüche 8 bis 11 definiert.

13. Brennstoffzelle nach Anspruch 12, wobei wenigstens ein Eigenschaftsgradient der Gasdiffusionslage mit wenigstens einem der Eigenschaftsgradienten der durch die Brennstoffzelle strömenden Betriebsmedien und/oder der Betriebsparameter der Brennstoffzelle korrespondiert.

14. Verwendung einer Gasdiffusionslage, wie in einem der Ansprüche 1 bis 7 definiert, oder erhältlich durch ein Verfahren, wie in einem der Ansprüche 8 bis 11 definiert, zur Herstellung von Brennstoffzellen mit verringerter Schwankung der Stromdichte über die Elektrodenflächen, speziell auf der Kathodenseite.
